# EUROPEAN PATENT APPLICATION

(11) **EP 4 651 229 A1**
(43) Date of publication of application: **19.11.2025**
(21) Application number: 24305731.2
(22) Date of filing: 13.05.2024
(51) Int. Cl.: H01M 4/36, H01M 4/40, H01M 4/62, H01M 10/0525, H01M 10/0562

(54) **PROCESS OF TREATMENT OF A SOLID ELECTROLYTE MATERIAL**

(71) Applicant: Saint-Gobain Ceramics & Plastics Inc., Worcester, Massachusetts 01615 (US); Fundación Centro de Investigación Cooperativa de Energías Alternativas, CIC Energigune Fundazioa, 01510 Vitoria-Gasteiz, Álava (ES)
(72) Inventor: MARCHANDIER, Thomas, 93300 Aubervilliers (FR); LANNELONGUE, Pierre, 01510 MINAO (ES); LOPEZ-ARANGUREN, Pedro, 01510 MINAO (ES); LINDBERG, Simon, 01510 MINAO (ES)
(74) Representative: Saint-Gobain Recherche

(57) **Abstract**

The present invention relates to a process of a treatment of a solid electrolyte material of the formula M_{3-z}(Me^{k+})_{f}X_{3-z+k*f} wherein -3≤z≤3, 2≤k<6, 0<f≤1;M comprises an alkali metal element including Li; Me is Y and X is a halogen, comprising the steps of: a) contacting the solid electrolyte material with lithium in the metallic state, and b) heating the solid electrolyte material in contact with lithium in the metallic state, to a temperature of at least 50 °C . The invention further concerns: a solid electrolyte material obtainable from a process according to the invention and an all-solid-state battery comprising an anode layer comprising lithium in the metallic state, at least one electrolyte layer comprising a solid electrolyte material according to the invention, and a cathode, wherein the anode layer is in contact with the said electrolyte layer.

## Description

### Technical field

The present invention belongs to the field of all-solid-state rechargeable batteries (ASSB) and in particular relates to their individual constituents such as an anode, a cathode and a solid electrolyte, as well as the interactions between said components. In particular, the invention pertains to a process of treatment of a solid electrolyte material.

### Technical background

ASSBs are of particular interest as a substitute to traditional Li-Ion batteries, especially since they raise fewer safety concerns and have higher capacities.

To obtain an ASSB, a solid electrolyte is used instead of the liquid electrolytes found in Li-Ion batteries. ASSBs also use Li-metal anodes and high energy NMC cathode particles, said particles being incorporated into the solid state electrolyte.

Such solid electrolyte is for example chosen from lithium thiophosphate (β-Li₃PS₄, LPS), argyrodite (Li₆PS₅Cl) such as described in H.J. Deiseroth, et al. "Li6PS5X: a class of crystalline Li-rich solids with an unusually high Li+ mobility." Angew. Chem. Int. Ed., 47 (2008), pp. 755-758 and halides, for example Li3InCl6, such as described in X. Li et al. "Air-stable Li3InCl6 electrolyte with high voltage compatibility for all-solid-state batteries." Energy Environ. Sci., 2019,12, pp. 2665-267; Schmidt, M. O. et al. "Zur Kristallstruktur von Li3InCl6." Zeitschrift für Anorg. und Allg. Chemie 1999, 625 (4), 539-540; and G.Meyer, et al. "Handbook on the Physics & Chemistry of Rare Earths", V.28, chapter 177, 2000 Elsevier Sci.

However, the main drawback of these compounds is their chemical and electro-chemical interactions with electrode materials.

Halide solid electrolytes are of particular interest since they display good ionic conductivity (above 2 mS.cm⁻¹), high electro-chemical stability against oxidation at cathode side and a better compactibility (deformability) than other solid-state inorganic electrolytes.

However, halide solid electrolytes, while demonstrating good electrochemical resistance to high energy NMC cathode, are incompatible with Li-metal anodes, in particular Li-metal, and LiₓSi_{y}, which reduce the electrolytes to the metallic state.

This reduction leads to the fast ageing of ASSBs.

Multi-halide solid electrolyte such as the electrolytes of formula Li₃YBr₆₋ₓClₓ with 0.5 ≤ x ≤ 5 described in the application EP 3 736 830 A1, are known to improve the stability and present a higher ionic conductivity for the electrolyte than their "mono-halide" counterparts, i.e. Li₃YCl₆ and Li₃YBr₆.

In J. Liang, et al. « Site-Occupation-Tuned Superionic LixScCl3+x Halide Solid Electrolytes for All-Solid-State Batteries", J. Am. Chem. Soc. 2020, 142, 15, 7012-7022, other electrolyte formulae were investigated to enhance the ionic conductivity and electrochemical stability of halide solid electrolytes.

A known strategy for stabilizing the halide/Li interface, i.e. the interface between the electrolyte layer comprising a halide solid electrolyte and the anode layer, is passivation.

For example, S. Zhang, et al. "Advanced High-Voltage All-Solid-State Li-Ion Batteries Enabled by a Dual-Halogen Solid Electrolyte", Adv. Energy Mater. 2021, 212100836 and X. Luo, et al. "Effective regulation towards electrochemical stability of superionic solid electrolyte via facile dual-halogen strategy, Chemical Engineering Journal 465 (2023) 143036" describe the use of fluorine introduced in a halide solid electrolyte to form F-containing passivating components at an applied potential, protecting the F-containing halide solid electrolyte from further decomposition.

Another known passivation method, for example in WO 2020/216597 A1 with an oxide solid electrolyte (LLZO), is the preliminary cycling of a cell at specific cycling regimens.

### Summary of the invention

### Technical problem

The invention thus offers to solve the technical problem of improving the electrochemical stability of halide solid electrolytes, in particular containing yttrium.

The invention is of particular interest when implemented in a battery wherein said halide solid electrolyte is contacted with lithium in the metallic state, for example when the anode comprises or is constituted of lithium.

### Solution to the technical problem

The inventors surprisingly found that exposing a halide solid electrolyte comprising yttrium, in contact with lithium in the metallic state, to a treatment as described herein after, allowed to obtain a stabilized interface between said halide solid electrolyte and an anode in all-solid-state battery.

Thus, according to a first aspect, the invention relates to a process of a treatment of a solid electrolyte material of the formula

M_{3-z}(Me^{k+})_{f}X_{3-z+k*f}

wherein -3≤z≤3, 2≤k<6, 0<f≤1;
M comprises an alkali metal element including Li;
Me is Y and may further comprise a divalent, trivalent, tetravalent, pentavalent or hexavalent metal element or any combination thereof, in particular chosen from:
   ▪ alkaline earth metals, including Ba, Mg, Ca, Sr,
   ▪ rare earth elements such as Ce, Gd, Er, La, Yb and their combinations,
   ▪ a 3d transition metal such as Zn, Cu, V, and
   ▪ an element chosen from Zr, Ti, Sn, Th, Ge, Ta, Nb, Mo, W, Sb, Te, In Bi, Al, Ga, and
   ▪ any combination thereof, and
X is a halogen, in particular chosen from Cl, Br, I and any combination thereof; comprising the steps of:
   a) contacting the solid electrolyte material with lithium in the metallic state, and
   b) heating the solid electrolyte material in contact with lithium in the metallic state, to a temperature of at least 50 °C.

According to a second aspect, the present invention also concerns a solid electrolyte material obtainable from a process according to the invention.

According to a third aspect, the invention pertains to an all-solid-state battery comprising:
- an anode layer comprising lithium in the metallic state,
- at least one electrolyte layer comprising a solid electrolyte material according to the invention, and
- a cathode,
wherein the said anode layer is in contact with the said electrolyte layer.

### Advantages of the invention

As demonstrated herein after, applying a treatment process according to the invention to a solid electrolyte material as described herein allows a passivation phenomenon to occur at the interface between the solid electrolyte material and lithium in a metallic state.

Said passivation phenomenon results in the creation of an interlayer, located within the solid electrolyte material, at the interface with the lithium in the metallic state.

Without being bound by any theory, the inventors believe that said interlayer mainly comprises yttrium. Said yttrium is deemed to have migrated from the halide solid electrolyte material towards the lithium electrode.

As a result of said migration, the interlayer has an yttrium content that is higher than the rest of the electrolyte layer.

In particular, the yttrium content is higher in the interlayer than in the electrolyte solid material of the electrolyte layer in the direct vicinity, in particular in contact, with said interlayer.

Said interlayer acts as a protective layer, a passivation layer, or Solid Electrolyte Interface (SEI), that stabilizes the interface between the electrode, typically the anode, and the halide solid electrolyte. This stabilization allows for a better cyclability of the whole all-solid-state battery.

Therefore, the present invention enables the use of lithium metal anodes. Said anodes are of particular interest to reach high capacities.

### Brief description of drawings

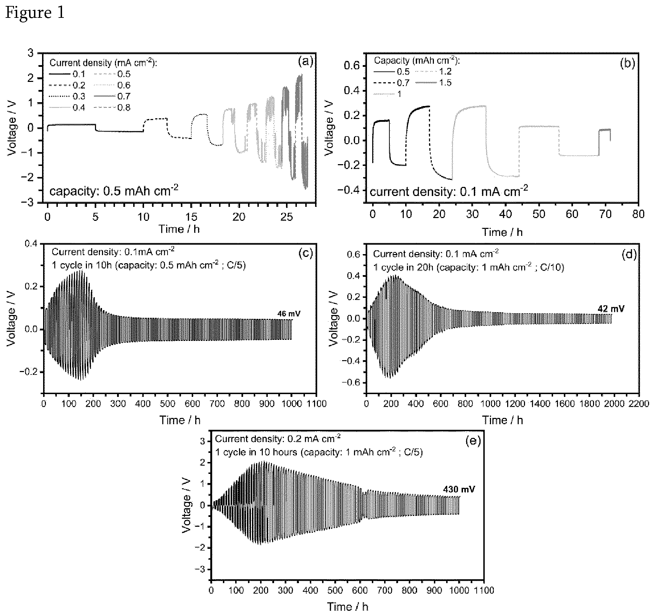

Fig. 1 represents charge-discharge curves, or voltage-time curves, of Liₘₑₜₐₗ/LiYClBr/Liₘₑₜₐₗ symmetric cells of the configuration of Reference 1, i.e. without a treatment to the electrolyte according to the invention. Fig. 1a represents the curve obtained from the critical current density measurement, Fig. 1b represents the curve obtained from the critical area capacity measurement and Figs. 1c, 1d and 1e represent the curves obtained in various stripping/plating cycling conditions detailed herein after.

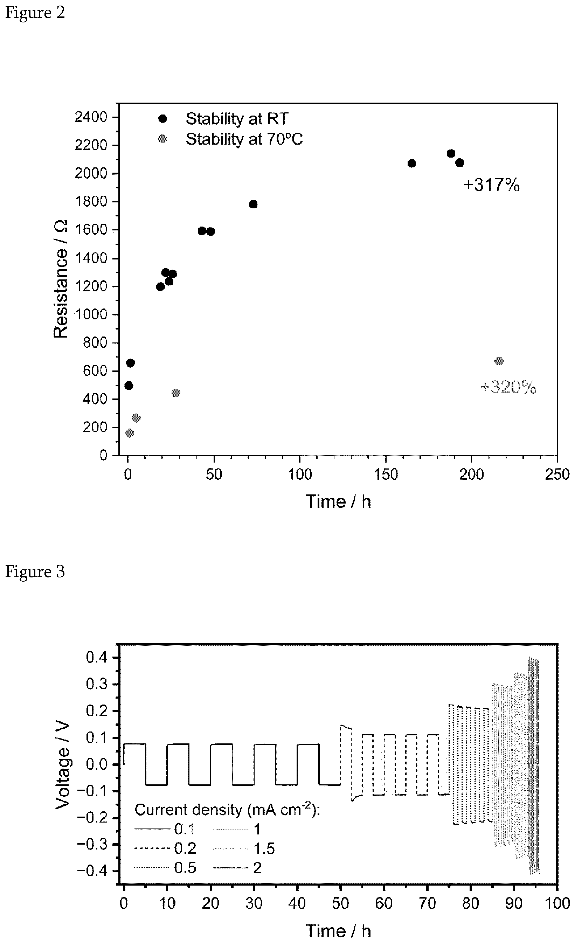

Fig. 2 represents a resistance issue from Potentiostatic Electrochemical Impedance Spectroscopy (PEIS) performed at room temperature (black dots) and at 70 °C (grey dots) on a cell of a configuration corresponding to the one of Reference 1.
Fig. 3 represents a charge-discharge curve of a Liₘₑₜₐₗ/LiYClBr/Liₘₑₜₐₗ symmetric cell of the configuration of the Example 1, i.e. with a treatment according to the invention. Said curve represent in particular the measurement of the critical current density.

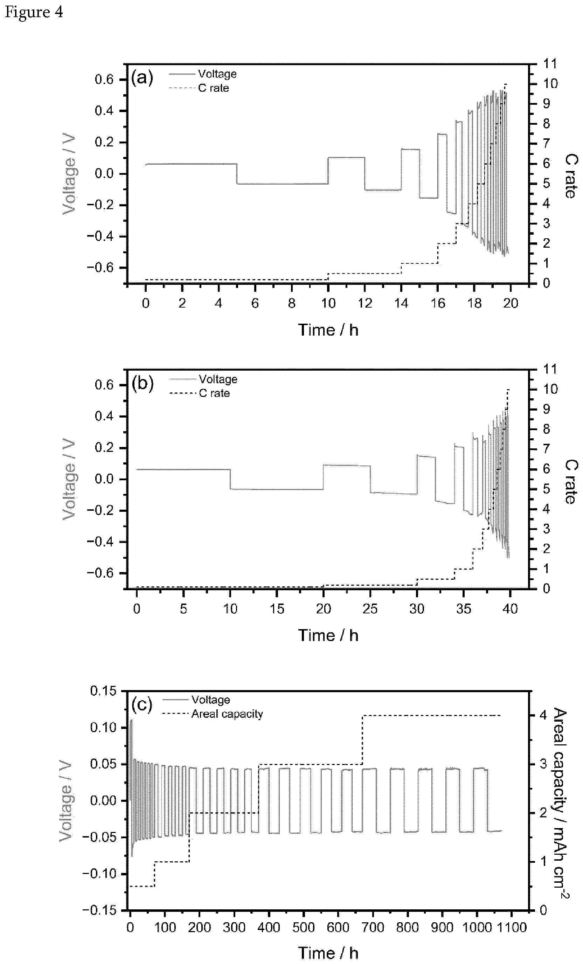

Fig. 4 represents charge-discharge curves of Liₘₑₜₐₗ/LiYClBr/Liₘₑₜₐₗ symmetric cells of the configuration of the Example 2 according to the invention. Figs 4a and 4b represent the curves obtained from the measurement of the critical current density and Fig. 4c represents the curve obtained from the critical area capacity measurement.

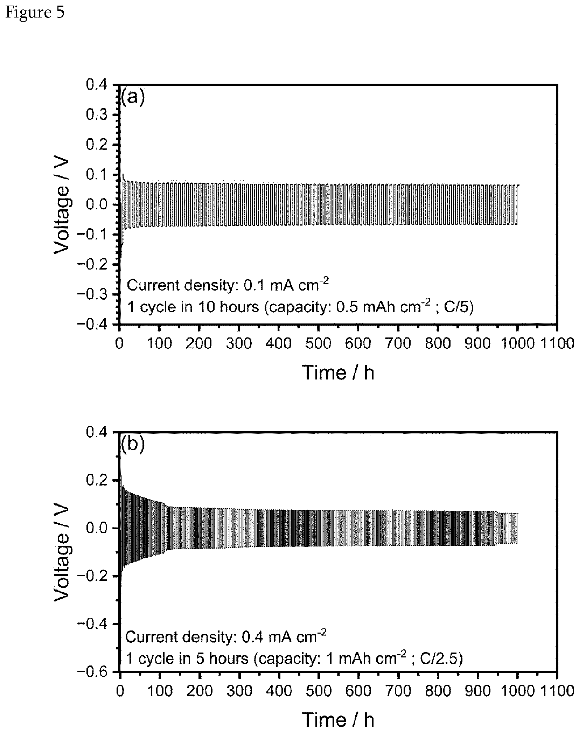

Fig. 5 represents charge-discharge curves of Liₘₑₜₐₗ/LiYClBr/Liₘₑₜₐₗ symmetric cells of the configuration of the Example 3 according to the invention. Figs. 5a and 5b represent the stripping/plating cycling of said cell in various conditions detailed herein below.

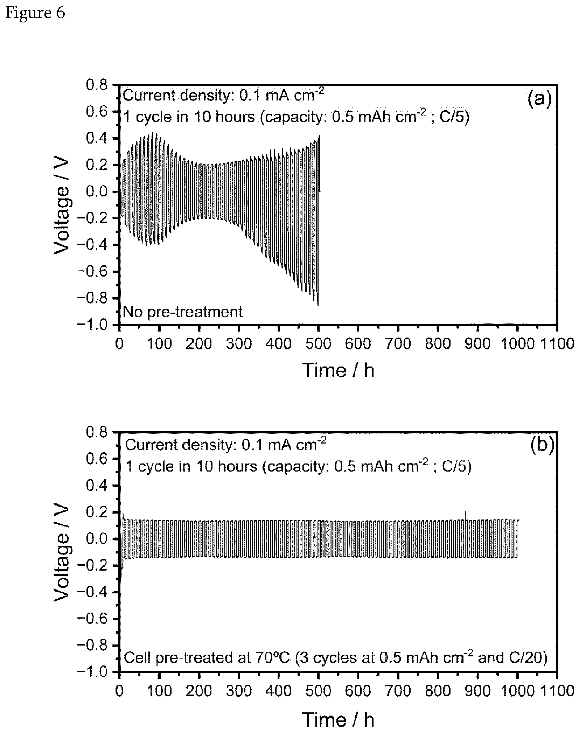

Fig. 6 represents charge-discharge curves of Liₘₑₜₐₗ/LiYClBr/Liₘₑₜₐₗ symmetric cells of the configuration corresponding to the Reference 2 and to the Example 3 according to the invention, i.e. having electrodes consisting of 80 µm of Li sputtered on copper. Fig. 6a represents the stripping/plating cycling of a cell according to Reference 2, i.e. without a treatment to the electrolyte according to the invention and Fig. 6b represents the stripping/plating cycling of a cell according to Example 4 according to the invention.

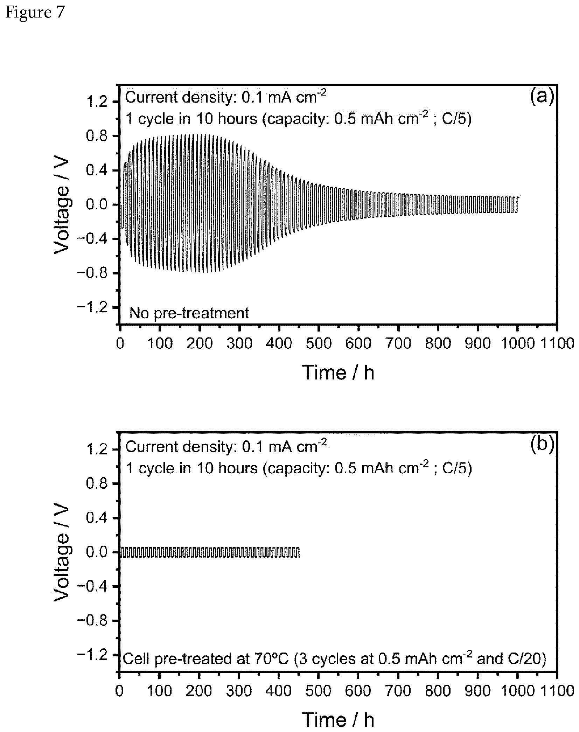

Fig. 7 represents charge-discharge curves of Liₘₑₜₐₗ/LiYCl/Liₘₑₜₐₗ symmetric cells of the configuration corresponding to the Reference 3 and to the Example 5 according to the invention. Fig. 7a represents the stripping/plating cycling of a cell according to Reference 3, i.e. without a treatment to the electrolyte according to the invention and Fig. 7b represents the stripping/plating cycling of a cell according to Example 5 according to the invention.

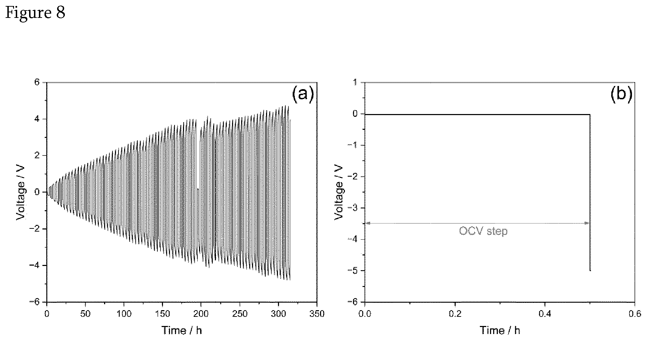

Fig. 8 represents charge-discharge curves of Liₘₑₜₐₗ/LiInScCl/Liₘₑₜₐₗ symmetric cells of the configuration corresponding to the References 4 and 5. Figs. 8a and 8b respectively represent the stripping/plating cycling of cells according to Reference 4 and Reference 5.

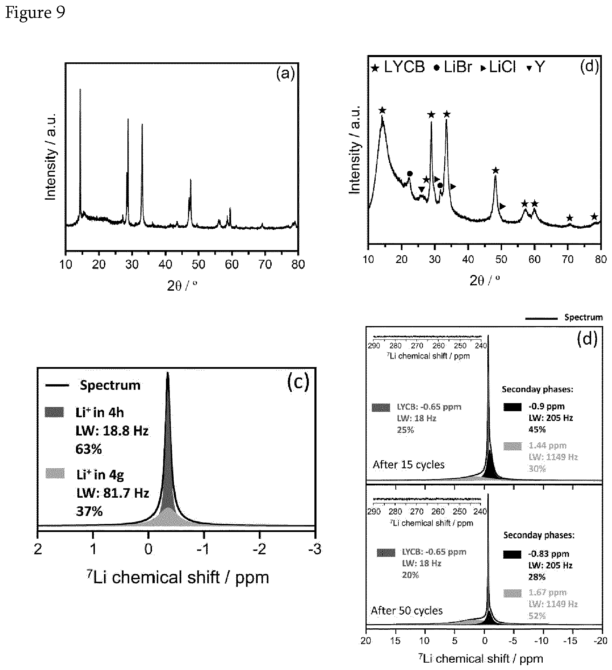

Fig. 9 represents the post-mortem analysis of cells having a configuration according to the example 3 according to the invention. Fig. 9a is an X-ray Diffractogram (XRD) of a pristine LiYClBr. Fig. 9b is an XRD of the electrolyte material contained in a cell after 100 cycles. Fig. 9c represents a ⁷Li NMR spectroscopy performed on pristine LiYClBr. Fig. 9d represents a ⁷Li NMR performed on the electrolyte material contained in a cell after 15 and 50 cycles.

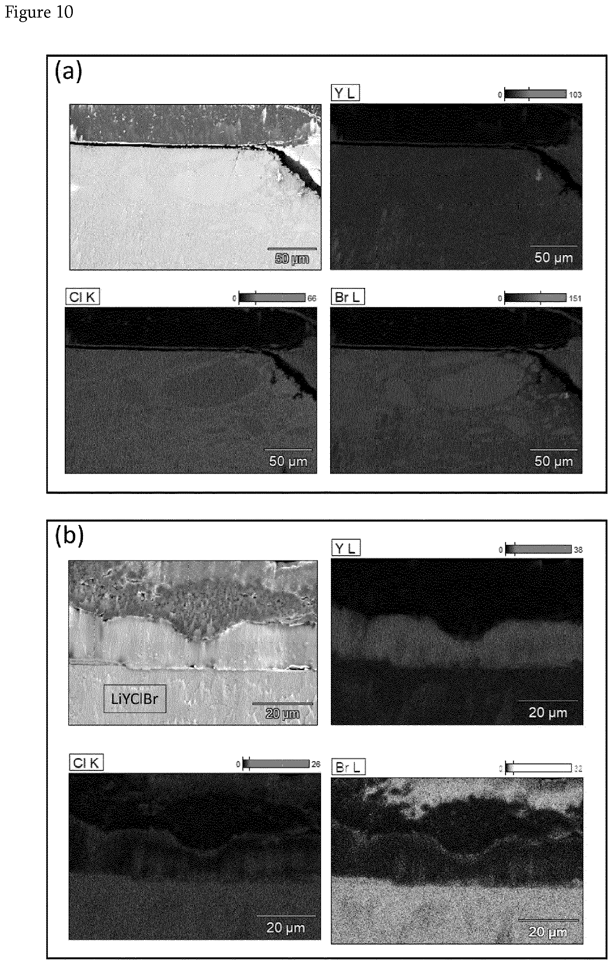

Fig. 10 represents images obtained by Scanning Electron Microscopy (EDX) of the interface between the electrolyte and an electrode in cells having a configuration according to the example 3 according to the invention. The cells observed in Fig. 10a were cycled for 5 cycles before observation and the cells observed in Fig. 10b were cycled for 100 cycles before observation.

### Detailed description of embodiments

The process according to the invention is a treatment of a solid electrolyte material as described herein after.

### Halide solid electrolytes

The process according to the invention is performed on a specific solid electrolyte material: a halide solid electrolyte of the formula:

M_{3-z}(Me^{k+})_{f}X_{3-z+k*f}

wherein -3≤z≤3, 2≤k<6, 0<f≤1;
a) M comprises an alkali metal element including Li;
b) Me is Y and may further comprise a divalent, trivalent, tetravalent, pentavalent or hexavalent metal element or any combination thereof, in particular chosen from:
   i. alkaline earth metals, including Ba, Mg, Ca, Sr,
   ii. rare earth elements such as Ce, Gd, Er, La, Yb and their combinations,
   iii. a 3d transition metal such as Zn, Cu, V, and
   iv. an element chosen from Zr, Ti, Sn, Th, Ge, Ta, Nb, Mo, W, Sb, Te, In Bi, Al, Ga, and
   v. any combination thereof, and
c) X is a halogen, in particular chosen from Cl, Br, I and any combination thereof.

In a particular embodiment, Me comprises more than one metal element, i.e. more than just Y. Then k may be the average of the total of the valence of each metal element. For example, Me includes a trivalent element (Y) and may further include a tetravalent element in equal molar quantity. In that case, k=(3+4)/2=3.5. In particular, k may be 2 (when Me is only Y), 3, 4 or 5.

It is understood that atomic vacancy can be present inside the unit cell of the halide solid electrolyte. In this case, atomic vacancy can be noted in the formula of the solid halide electrolyte as M_{3-z}(Me^{k+})_{f•y}X_{3-z+k*f} wherein • represents atomic vacancy inside the unit cell and y is the number of vacant atomic positions. In a particular embodiment, y can be f*(k-1).

In a particular embodiment, M can include Li as well as Na, K, Rb, Cs, or any combination thereof. For example, M can include Li and at least one of K and Na, or a combination thereof. In still another example, M can consist of Li and at least one of Cs and Rb. In another example, M can consist Li and of at least one of Na and Cs.

In a preferred embodiment, M consists of Li.

In a particular embodiment, Me can include an alkaline earth metal element, a rare earth element, a 3d transition metal, an element chosen from Zr, Ti, Sn, Th, Ge, Ta, Nb, Mo, W, Sb, Te, In Bi, Al, Ga, and any combination thereof. For example, Me can include an alkaline earth metal including Ba, Mg, Ca and Sr, or any combination thereof. In another example, Me can include a rare earth element, in particular Me can consist of at least one rare earth element. The rare earth element may be chosen from Ce, Gd, Er, La, Yb and their combinations. In a further example, Me can include a 3d transition metal, in particular chosen from Zn, Cu, V and any combination thereof. In still another example, Me can include an element chosen from Zr, Ti, Sn, Th, Ge, Ta, Nb, Mo, W, Sb, Te, In Bi, Al, Ga and any of their combinations.

In a preferred embodiment, Me consists of Y or a combination of Y and In.

In a particular embodiment, X can include a halogen, in particular chosen from Cl, Br, I and any combination thereof. In an example, X can include at least one of Cl and Br. Preferably, X can consist of Cl, Br or any combination thereof.

In a particular embodiment, the halide solid electrolyte can be represented by Li_{3-z}Me^{k+}X_{3-z+k}. When z is not 0, the complex metal halide can be non-stoichiometric. When z is 0, the complex metal halide can be stoichiometric. For example, -0.95≤z≤0.95. In another example, Me includes Y as well as Gd, Yb, In, Sc, Zn, Mg, Ca, Ba, Sn or a combination thereof, and X is Cl, Br or a combination thereof.

In a particular embodiment, the solid halide electrolyte can be represented by Li₃MeBr₆. In another particular embodiment, the solid halide electrolyte can be represented by Li₃MeCl₆. In these embodiments, Me can comprise Y and, optionally at least one of the above-mentioned metal elements, having a valence of 3. Me can comprise Y and include at least one of the above-mentioned metal elements, wherein the average valence of the at least one metal element is 3.

In another particular embodiment, the solid halide electrolyte can consist of Li, Y, and at least one of Cl and Br. For example, the solid halide electrolyte can consist of Li, Y and Cl. In another example, the solid halide electrolyte can consist of Li, Y and Br. In still another example, the solid halide electrolyte can consist of Li, Y, Cl and Br. In yet another example, the solid halide electrolyte can consist of Li, Y, In, Cl and Br In a particular example, the solid halide electrolyte can be represented by Li₃ₓY₁₋ₓCl₃ or Li₃ₓY₁₋ₓBr₃, wherein 0<x≤0.5, or represented by Li₃Y₁₋ₓInₓCl_{6-y}Br_{y} wherein 0<x<0.5 and 1.0<y<3.0.

The solid halide electrolyte may be chosen from Li₃YCl₆, Li₃YBr₆, Li_{2.7}Y_{0.7}Zr_{0.3}Cl₆, Li_{2.8}Y_{0.8}Sn_{0.2}Cl₆, Li_{3.2}Y_{0.8}Zn_{0.2}Cl₆, Li_{3.2}Y_{0.8}Mg_{0.2}Cl₆, Li₃Y_{1/3}Zr_{1/3}Mg_{1/3}Cl₆, Li₃Y_{1/3}Sn_{1/3}Mg_{1/3}Cl₆, Li₃Y_{1/3}Zr_{1/3}Zn_{1/3}Cl₆, Li_{2.95}Na_{0.05}YBr₆, Li_{2.95}K_{0.05}YBr₆, Li_{2.95}Cs_{0.05}YBr₆, Li₃Y_{0.7}Gd_{0.3}Br₆, Li₃Y_{0.8}Yb_{0.2}Br₆, Li₃Y_{0.9}La_{0.1}Br₆, Li_{2.9}Y_{0.9}Ce_{0.1}Br₆, Li₃In_{0.5}Y_{0.5}Cl₆, Li₃Y₁₋ₓInₓ(Cl,Br)₆ such as Li₃Y_{0.985}In_{0.015}Cl₄Br₂ or Li₃Y(Cl,Br)₆ such as Li₃YCl₄Br₂.

### Treatment

The solid electrolyte material as defined herein above is submitted to a process of a treatment comprising the steps of:
a) contacting the solid electrolyte material with lithium in the metallic state, and
b) heating the solid electrolyte material in contact with lithium in the metallic state to a temperature of at least 50 °C.

In a particular embodiment, the solid electrolyte material is heated to a temperature ranging from 55 to 200 °C, in particular from 60 to 150 °C and preferably from 65 to 100 °C.

In a particular embodiment, the heating step is performed at Open Circuit Voltage.

Open Circuit Voltage (OCV) refers to the voltage across the terminals of a device or system when no current is flowing through it, hence the circuit is open. In the context of the present invention, it thus means that no current is applied to the electrodes surrounding the solid electrolyte material. Therefore, in this embodiment said electrodes can not be consumed or deteriorated by a process according to the invention; for example, there is no lithium consumption from a cathode.

In a particular embodiment, the heating step is performed for a duration ranging from 1 hour to 10 days, in particular from 12 hours to 8 days and preferably from 3 days to 6 days.

In a particular embodiment of the process according to the invention, a current is applied to the solid electrolyte material during the heating step.

In a particular embodiment, the heating step is performed while applying a current equivalent ranging from C/60 to 2C , in particular from C/40 to C/2 and preferably of C/20 and a constant areal capacity ranging from 0.05 to 0.85 mAh.cm⁻², in particular from 0.1 to 0.75 mAh.cm⁻² and preferably from 0.25 to 0.5 mAh.cm⁻², for a number of cycles ranging from 1 to 10, in particular from 2 to 7 and preferably from 3 to 5.

In the context of the present invention, the notation "C" used in C/60 and 2C represents the charge or discharge rate relative to the capacity of a cell comprising the solid electrolyte material. For example, C/60 means that the cell is charged or discharged at a rate such that it takes 60 hours to complete a full charge or discharge cycle. 2C means that the cell is charged or discharged at a rate such that it takes 30 minutes to complete a full charge or discharge cycle.

The areal capacity or "capacity" of a cell refers to the amount of charge that can be stored or delivered by said cell per unit area of its electrode surface. For example, if a cell has a capacity of 0.85 mAh.cm⁻², it means that each square centimetre of its electrode surface can store or deliver 0.85 mAh of charge.

The process according to the invention can be implemented on a fully assembled all-solid-state-battery.

Thus, in a particular embodiment, the solid electrolyte material is contacted with lithium in the metallic state within an all-solid-state battery.

As recited herein above and demonstrated in the examples below, the implementation of a process according to the invention leads to a solid electrolyte layer comprising an interlayer, or sublayer, at the interface of the solid electrolyte layer with lithium in the metallic state.

Said interlayer mainly comprises yttrium and a gradient of the yttrium content, from the surface to the bulk, is observed in the solid electrolyte layer in the direct vicinity of the interlayer.

The present invention thus also pertains to a solid electrolyte material obtainable from a process according to the invention.

In particular, this material is comprised in or constitutes the solid electrolyte layer in an all-solid-state battery according to the invention.

It is apparent that such a material can be differentiated from other solid electrolytes of the same chemical formula or composition in that it presents a gradient of yttrium content extending from the surface of the electrolyte material in the direction of the bulk of the electrolyte material.

In a particular embodiment of the invention, the electrolyte material is coated on the surface from which the gradient is extending by a layer comprising yttrium in a content of at least 50 % wt.

The layer referred to in the previous paragraph correspond to the interlayer described above.

Said layer may further comprise species such as MX wherein M and X are as defined above.

In particular, M may be Li and X may be Cl or Br.

Said species may be found in a content higher than any other specie at the surface of the electrolyte material coated by the interlayer. Their content may reduce proportionally to the raise of the gradient of yttrium content in the solid electrolyte material.

### Battery

A battery may be obtained using the solid electrolyte material according to the invention and obtainable from a process according to the invention. Said battery may be assembled using techniques known by the person skilled in the art. In particular, said battery is an all-solid-state-battery. Such a battery forms part of the present invention.

Accordingly, the present invention pertains to an all-solid-state battery comprising:
a) an anode layer comprising lithium in the metallic state,
b) at least one electrolyte layer comprising a solid electrolyte material according to the invention, and
c) a cathode,
   wherein the lithium in the metallic state is in contact with the electrolyte layer.

Said battery comprises a cathode, an anode and at least one electrolyte layer. The electrolyte layer is provided between the cathode and the anode.

In a battery according to the invention, the anode layer may consist of lithium in the metallic state.

The anode may also be a lithium alloy such as LiₓIn_{y} wherein x ranges from 0 to 1 and y ranges from 0 to 1.

The thickness of the anode in a battery according to the invention may range from 10 µm to 500 µm, in particular the thickness of the anode ranges from 20 µm to 250 µm and preferably from 30 µm to 150 µm.

As described above, when a process according to the invention is implemented on a solid-state battery, an interlayer may form within the electrolyte layer at the surface in contact with the anode layer.

Accordingly, an all-solid-state battery according to the invention may comprise within the electrolyte layer, an interlayer formed at the surface in contact with the lithium in the metallic state, said interlayer having an yttrium content that is higher than the rest of the electrolyte layer.

In a battery according to the invention, the cathode may take the form of a cathode composite comprising a cathode active material.

In a particular embodiment, the cathode composite may further comprise a halide solid electrolyte, preferably a solid electrolyte according to the invention. In particular, the cathode may comprise particles comprising, preferably consisting in, said solid electrolyte.

Accordingly, an all-solid-state battery according to the invention may comprise a cathode that is a cathode composite comprising a cathode active material and a solid electrolyte material, identical to or different from the solid electrolyte material as described herein, preferably the solid electrolyte material comprised in the cathode composite is the solid electrolyte material as described herein.

The cathode active material is a material capable of storing and releasing metal ions, in particular alkali metal ions such as Li or Na ions.

As cathode active materials transition metal fluorides, polyanionic materials, fluorinated polyanionic materials, transition metal sulphides, transition metal oxyfluorides, transition metal oxysulphides, transition metal oxynitrides, transition metal phosphates and lithium-containing transition metal oxide, doped or not, coated or not may be used. In particular, the cathode active material may be a transition metal oxide such as a lithium-cobalt oxide, a lithium-nickel-cobalt-aluminium oxide or a lithium-nickel-manganese-cobalt-oxide or a transition metal phosphate such as a lithium-iron phosphate, lithium-cobalt phosphate, lithium-nickel phosphates or lithium-manganese phosphates. Transition metal oxides suitable for use as a cathode active material may be, for example, LiNi_{0.6}Mn_{0.2}Co_{0.2}O₂, Li(NiCoAl)O₂ and LiCoOz. Preferably, the cathode active material is the transition metal oxide of the formula LiNi_{0.6}Mn_{0.2}Co_{0.2}O₂. Alternatively, the cathode active material may be LiFePO₄.

The cathode active material may be present in a battery according to the invention, in the form of particles. The median diameter of the cathode active material particles may range from 0.1 µm to 100 µm.

The thickness of the cathode in an ASSB according to the invention may range from 10 µm to 500 µm.

In a battery according to the invention, the cathode composite may comprise an electron conductor compound chosen from metal powders, conductive whiskers, conductive metal oxides, conductive polymers, metal fibres or electron conducting carbon compound such as natural or artificial graphite, graphene, carbon nano-tubes, acetylene black, Ketjen black, activated carbon, carbon fluoride and carbon fibres, preferably the electron conductor is vapour grown carbon fibres.

In a particular embodiment, in the battery according to the invention, the cathode composite may comprise:
a) from 55 to 75 % wt., in particular from 60 to 70 % wt., and preferably 66.7 % wt. of cathode active material as described above,
b) from 20 to 40 % wt., in particular from 25 to 30 % wt., and preferably 28.6 % wt. of halide solid electrolyte, in particular of a solid electrolyte material of the same formula as the solid electrolyte according to the invention, and
c) from 1 to 10 % wt., in particular from 2 to 7 % wt., and preferably 4.8 % wt. of an electron conducting carbon compound as described above.

### Examples

The table 1 below presents the different configurations tested.

| | Electrolyte formula | Anode | Treatment | Temp. (°C) | Capacity (mAh. cm⁻²) | Duration |
|---|---|---|---|---|---|---|
| Ref. 1 | LiYClBr | Li metal | None | - | - | - |
| Ex. 1 | LiYClBr | Li metal | OCV | 70 | - | 6 days |
| Ex. 2 | LiYClBr | Li metal | OCV | 70 | - | 3 days |
| Ex. 3 | LiYClBr | Li metal | C/20 | 70 | 0.5 | 3 cycles |
| Ref. 2 | LiYClBr | Cooper/Li (Li: 80µm) | None | - | - | - |
| Ex. 4 | LiYClBr | Cooper/Li (Li: 80µm) | C/20 | 70 | 0.5 | 3 cycles |
| Ref. 3 | LiYCl | Li metal | None | - | - | - |
| Ex. 5 | LiYCl | Li metal | C/20 | 70 | 0.5 | 3 cycles |
| Ref. 4 | LiInScCl | Li metal | None | - | - | - |
| Ref. 5 | LiInScCl | Li metal | C/20 | 70 | 0.5 | 3 cycles |

### Preparation of the electrochemical cell

For each of the examples according to the invention and the reference examples listed above, the halide solid electrolyte powder is first densified by applying a uniaxial pressure of 390 MPa. The anode is then formed and attached to both sides of the electrolyte, forming the electrochemical cell.

Said cell is then placed in a Swagelok for testing.

### Reference 1: cycling of the cell

The configuration of the cell corresponding to Reference 1 was cycled according to the following parameters:
a) Critical current density measurement: at a constant capacity of 0.5 mAh.cm⁻², the current density is varied from 0.1 to 2 mA.cm⁻² by increments of 0.1 mA.cm⁻², 5 cycles are performed for each current density: the observed critical current density is 0.3 mA.cm⁻². (Figure 1a)
b) Critical areal capacity measurement: at a constant current density of 0.1 mA.cm⁻¹, the areal capacity is varied from 0.5 to 1.5 mAh.cm⁻², 5 cycles are performed for each areal capacity: the observed critical areal capacity is 1.2 mAh.cm⁻² (Figure 1b)
c) Stripping/plating -at a constant capacity of 0.5 mAh.cm⁻² and a constant current density of 0.1 mA.cm⁻¹, the cell is cycled at a rate of C/5 for 1000 h. After the first 150 h of cycling, the overpotential increased up to 270 mV and then decreased and stabilized at 45 mV. (Figure 1c)
d) Stripping/plating - at a constant capacity of 1 mAh.cm⁻² and a constant current density of 0.1 mA.cm⁻¹, the cell is cycled at a rate of C/10 for 2000 h. After the first 200 h of cycling, the overpotential increased up to 400 mV and then decreased and stabilized at 45 mV. (Figure 1d)
e) Stripping/plating - at a constant capacity of 1 mAh.cm⁻² and a constant current density of 0.2 mA.cm⁻¹, the cell is cycled at a rate of C/5 for 1000 h. After the first 200 h of cycling, the overpotential increased up to 2 V and then decreased and stabilized at 430 mV. (Figure 1e)
f) Stripping/plating - at a constant capacity of 1 mAh.cm⁻² and a constant current density of 0.1 mA.cm⁻¹, the cell is cycled at a rate of C/3.3 for 70 h. This led to an uneven stripping/plating phenomenon.
Figures 1 a to 1e respectively represent the charge-discharge curves corresponding to the conditions listed above.

### Reference 1: stability of the cell

Impedance measurements were performed on cells with a configuration corresponding to Reference 1 and were reported in Figure 2.

At room temperature and after 200 h, the impedance increased by about 320 %.

The impedance measurements on these cells showed a large increase of the impedance with time, demonstrating the reactivity between the Li metal electrodes and the electrolyte.

At 70 °C, the impedance also increased by 320 % after 200 h but displayed lower values than at room temperature. Once the cell cooled down back to room temperature, the impedance became twice higher than for a cell left at room temperature. This suggest that the phenomenon occurring when the halide solid electrolyte is in contact with Li metal is accelerated.

### Example 1: cycling of the cell

Critical current density measurement: at a constant capacity of 0.5 mAh.cm⁻², the current density is varied from 0.1 to 2 mA.cm⁻² (0.1, 0.2, 0.5, 1, 1.5 and 2 mA.cm⁻²), 5 cycles are performed for each current density: the observed critical current density is 2 mA.cm⁻². (Figure 3)

Galvanostatic Electrochemical Impedance Spectroscopy (GEIS) at a constant capacity of 0.5 mAh.cm⁻² and a rate of C/5, an impedance is recorded every hour. GEIS showed that the cycling is stable from the second cycle.

### Example 2: cycling of the cell

Critical current density measurement: at a constant capacity of 0.5 mAh.cm⁻², the current density is varied from 0.1 to 2 mA.cm⁻² (0.1, 0.2, 0.5, 1, 1.5 and 2 mA.cm⁻²), 5 cycles are performed for each current density: the observed critical current density is 2 mA.cm⁻². (Figure 4a)

Critical current density measurement: at a constant capacity of 1 mAh.cm⁻², the current density is varied from 0.1 to 4 mA.cm⁻² (0.1, 0.2, 0.5, 1, 2, 3 and 4 mA.cm⁻²), 5 cycles are performed for each current density: the observed critical current density is 0.4 mA.cm⁻². (Figure 4b)

Critical areal capacity measurement: at a constant current density of 0.1 mA.cm⁻¹, the areal capacity is varied from 0.5 to 4 mAh.cm⁻² (0.5, 1, 2, 3 and 4 mAh.cm⁻²), 5 cycles are performed for each areal capacity: the observed critical areal capacity is 4 mAh.cm⁻². (Figure 4c)

Galvanostatic Electrochemical Impedance Spectroscopy (GEIS) at a constant capacity of 0.5 mAh.cm⁻² and a rate of C/5, an impedance is recorded every hour. GEIS showed that the cycling is stable from the second cycle.

### Reference 4: cycling of the cell

Stripping/plating - at a constant capacity of 0.2 mAh.cm⁻² and a constant current density of 0.1 mA.cm⁻¹, the cell is cycled at a rate of C/2 for 300 h. The overpotential increases irregularly and reaches 4.5 V after 300 h. (Figure 8a)

### Reference 5: cycling of the cell

Stripping/plating - at a constant capacity of 0.5 mAh.cm⁻² and a constant current density of 0.1 mA.cm⁻¹, the cell is cycled at a rate of C/5 for 1000 h. The cell is directly short-circuited and is not capable to cycle. (Figure 8b).

References 4 and 5 cells comprise solid electrolyte materials that do not contain Y. In that case, whether the cell is pre-treated or not, it is at least not stable for use with a Li metal electrode.

This suggests that the outstanding cycling performance of the halide in direct contact with lithium electrode might be induced by the presence of a mixed layered ionic and electronic conductive SEI containing Y.

### Example 3: cycling of the cell

Stripping/plating - at a constant capacity of 0.5 mAh.cm⁻² and a constant current density of 0.1 mA.cm⁻¹, the cell is cycled at a rate of C/5 for 1000 h. The overpotential is stable from the second cycle at 60 mV. (Figure 5a)

Stripping/plating - at a constant capacity of 1 mAh.cm⁻² and a constant current density of 0.1 mA.cm⁻¹, the cell is cycled at a rate of C/2.5 for 1000 h. The overpotential is stable from 100h at 60 mV. (Figure 5b)

Some cells having a configuration according to the example 3 according to the invention have been analysed post-mortem. They were first cycled at 0.5 mAh.cm⁻² at a rate of C/5 for 5, 15 or 50 or 100 cycles.

### Scanning electron microscopy

After 5 cycles, no evolution of the Halide/Li interface was observed (Figure 9a).

After 100 cycles, a Y-rich interlayer was observed between the halide solid electrolyte and the lithium electrode. A gradient in the yttrium content is noticeable: there is less yttrium at the surface of the electrolyte and more in the bulk. The yttrium seems to have migrated from the halide to the lithium electrode to form a protective layer that stabilizes the interface and thus improves cyclability. (Figure 9b)

### X-Ray Diffraction

By the comparison of Figures 9a (pristine electrolyte) and 9b (post-mortem after 100 cycles), the presence of LiCl, LiBr and Y in the electrolyte after cycling is observed, because of the reactivity of the electrolyte with Li.

### Nuclear Magnetic Resonance

By comparison of Figures 10a (pristine electrolyte) and 10b (post-mortem after 15 and 50 cycles), additional phases, other than the initial electrolyte are observed, consistent with the observations made by XRD.

### Reference 2: cycling of the cell

Stripping/plating - at a constant capacity of 0.5 mAh.cm⁻² and a constant current density of 0.1 mA.cm⁻¹, the cell is cycled at a rate of C/5 for 500 h. The overpotential continuously increases and reaches 800 mV after 500 h. (Figure 6a)

### Example 4: cycling of the cell

Stripping/plating - at a constant capacity of 0.5 mAh.cm⁻² and a constant current density of 0.1 mA.cm⁻¹, the cell is cycled at a rate of C/5 for 1000 h. The overpotential is stable from the second cycle at 140 mV. (Figure 6b)

### Reference 3: cycling of the cell

Stripping/plating - at a constant capacity of 0.5 mAh.cm⁻² and a constant current density of 0.1 mA.cm⁻¹, the cell is cycled at a rate of C/5 for 1000 h. The overpotential continuously increases and reaches 800 mV after 250 h and then decreases continuously to reach 85 mV at 1000 h. (Figure 7a)

### Example 5: cycling of the cell

Stripping/plating - at a constant capacity of 0.5 mAh.cm⁻² and a constant current density of 0.1 mA.cm⁻¹, the cell is cycled at a rate of C/5 for 1000 h. The overpotential is stable from the beginning at 55 mV. (Figure 7b)

## Claims

1. A process of a treatment of a solid electrolyte material of the formula
M_{3-z}(Me^{k+})_{f}X_{3-z+k*f}
wherein -3≤z≤3, 2≤k<6, 0<f≤1;
- M comprises an alkali metal element including Li;
- Me is Y and may further comprise a divalent, trivalent, tetravalent, pentavalent or hexavalent metal element or any combination thereof, in particular chosen from:
▪ alkaline earth metals, including Ba, Mg, Ca, Sr,
▪ rare earth elements such as Ce, Gd, Er, La, Yb and their combinations,
▪ a 3d transition metal such as Zn, Cu, V, and
▪ an element chosen from Zr, Ti, Sn, Th, Ge, Ta, Nb, Mo, W, Sb, Te, In Bi, Al, Ga, and
▪ any combination thereof, and
- X is a halogen, in particular chosen from Cl, Br, I and any combination thereof;
comprising the steps of:
a) contacting the solid electrolyte material with lithium in the metallic state, and
b) heating the solid electrolyte material in contact with lithium in the metallic state, to a temperature of at least 50 °C.

2. The process according to the preceding claim, wherein the solid electrolyte material is heated to a temperature ranging from 55 to 200 °C, in particular from 60 to 150 °C and preferably from 65 to 100 °C.

3. The process according to any of the preceding claims, wherein the heating step is performed at Open Circuit Voltage.

4. The process according to any of the preceding claims, wherein the heating step is performed for a duration ranging from 1 hour to 10 days, in particular from 12 hours to 8 days and preferably from 3 days to 6 days.

5. The process according to claim 1, wherein the heating step is performed while applying a current equivalent ranging from C/60 to 2C, in particular from C/40 to C/2 and preferably of C/20 and a constant areal capacity ranging from 0.05 to 0.85 mAh.cm⁻², in particular from 0.1 to 0.75 mAh.cm⁻² and preferably from 0.25 to 0.5 mAh.cm⁻², for a number of cycles ranging from 1 to 10, in particular from 2 to 7 and preferably from 3 to 5.

6. The process according to any of the preceding claims, wherein the solid electrolyte material is chosen from Li₃YCl₆, Li₃YBr₆, Li_{2.7}Y_{0.7}Zr_{0.3}Cl₆, Li_{2.8}Y_{0.8}Sn_{0.2}Cl₆, Li_{3.2}Y_{0.8}Zn_{0.2}Cl₆, Li_{3.2}Y_{0.8}Mg_{0.2}Cl₆, Li₃Y_{1/3}Zr_{1/3}Mg_{1/3}Cl₆, Li₃Y_{1/3}Sn_{1/3}Mg_{1/3}Cl₆, Li₃Y_{1/3}Zr_{1/3}Zn_{1/3}Cl₆, Li_{2.95}Na_{0.05}YBr₆, Li_{2.95}K_{0.05}YBr₆, Li_{2.95}Cs_{0.05}YBr₆, Li₃Y_{0.7}Gd_{0.3}Br₆, Li₃Y_{0.8}Yb_{0.2}Br₆, Li₃Y_{0.9}La_{0.1}Br₆, Li_{2.9}Y_{0.9}Ce_{0.1}Br₆, Li₃In_{0.5}Y_{0.5}Cl₆, Li₃Y₁₋ₓInₓ(Cl,Br)₆ such as Li₃Y_{0.985}1n_{0.015}Cl₄Br₂, or Li₃Y(Cl,Br)₆ such as Li₃YCl₄Br₂.

7. The process according to any of the preceding claims, wherein the solid electrolyte material is contacted with lithium in the metallic state within an all-solid-state battery.

8. A solid electrolyte material obtainable from a process according to any of the preceding claims.

9. An all-solid-state battery comprising:
- an anode layer comprising lithium in the metallic state,
- at least one electrolyte layer comprising a solid electrolyte material according to the preceding claim, and
- a cathode,
wherein the said anode layer is in contact with the said electrolyte layer.

10. The battery according to the preceding claim, wherein the anode layer consists of lithium in the metallic state.

11. The battery according to any of the claims 9 or 10, wherein within the electrolyte layer an interlayer is formed at the surface in contact with the lithium in the metallic state, said interlayer having an yttrium content that is higher than the rest of the electrolyte layer.

12. The battery according to any of the claims 9 to 11, wherein the cathode is a cathode composite comprising a cathode active material and a solid electrolyte material, identical to or different from the solid electrolyte material as defined in the preceding claims, preferably the solid electrolyte material comprised in the cathode composite is the solid electrolyte material as defined in the preceding claims.

13. The battery according to any of the claims 9 to 12, wherein the cathode active material is chosen from transition metal fluorides, polyanionic materials, fluorinated polyanionic materials, transition metal sulphides, transition metal oxyfluorides, transition metal oxysulphides, transition metal oxynitrides and lithium-containing transition metal oxide, doped or not, coated or not, in particular the cathode active material is a transition metal oxide such as a lithium-cobalt oxide, a lithium-nickel-cobalt-aluminium oxide or a lithium-nickel-manganese-cobalt-oxide, preferably of the formula LiNi_{0.6}Mn_{0.2}Co_{0.2}O₂.

14. The battery according to any of the claims 9 to 13, wherein the cathode composite comprises an electron conductor compound chosen from metal powders, conductive whiskers, conductive metal oxides, conductive polymers, metal fibres or electron conducting carbon compound such as natural or artificial graphite, graphene, carbon nano-tubes, acetylene black, Ketjen black, activated carbon, carbon fluoride and carbon fibres, preferably the electron conductor is vapour grown carbon fibres.

15. The battery according to any of the claims 9 to 14, wherein the cathode composite comprises:
- from 55 to 75 % wt., in particular from 60 to 70 % wt., and preferably 66.7 % wt. of cathode active material,
- from 20 to 40 % wt., in particular from 25 to 30 % wt., and preferably 28.6 % wt. of halide solid electrolyte, in particular of a solid electrolyte material of the same formula as the solid electrolyte according to claim 8, and
- from 1 to 10 % wt., in particular from 2 to 7 % wt., and preferably 4.8 % wt. of an electron conducting carbon compound.
